# EUROPEAN PATENT APPLICATION

(11) **EP 3 799 166 A1**
(43) Date of publication of application: **31.03.2021**
(21) Application number: 19807727.3
(22) Date of filing: 16.05.2019
(51) Int. Cl.: H01M 4/52, C01G 53/00, H01M 4/36

(54) **POSITIVE ELECTRODE ACTIVE MATERIAL, POSITIVE ELECTRODE, ALKALINE BATTERY, AND METHOD FOR PRODUCING POSITIVE ELECTRODE ACTIVE MATERIAL**

(30) Priority: 21.05.2018 JP 2018096963; 17.12.2018 JP 2018235187
(71) Applicant: TOYOTA JIDOSHA KABUSHIKI KAISHA, Toyota-shi, Aichi 471-8571 (JP); Tanaka Chemical Corporation, Fukui-shi, Fukui 910-3131 (JP)
(72) Inventor: HOZUMI, Masato, Toyota-shi, Aichi 471-8571 (JP); OKUMURA, Motoyoshi, Toyota-shi, Aichi 471-8571 (JP); KIKUCHI, Takuro, Toyota-shi, Aichi 471-8571 (JP); HATA, Mikio, Fukui-shi, Fukui 910-3131 (JP); YASUDA, Taiki, Fukui-shi, Fukui 910-3131 (JP)
(74) Representative: TBK
(86) International application number: PCT/JP2019/019463
(87) International publication number: WO 2019/225461

(57) **Abstract**

A positive electrode active material includes a composite particle. The composite particle includes a core particle and a covering layer. The core particle includes a nickel composite hydroxide. The nickel composite hydroxide is represented by the following formula: Niₓ₁Zn_{1-x1-y1}Co_{y1}(OH)₂ (where x1 and y1 satisfy 0.90≤x1<1.00, 0≤y1≤0.01, and 0<(1-x1-y1)). The covering layer covers at least a part of a surface of the core particle. The covering layer includes a cobalt compound. In an X-ray absorption fine structure obtainable through measurement by a total electron yield method with soft X-ray, cobalt L₃ absorption edge has a peak top in a range not less than 780.5 eV.

## Description

### TECHNICAL FIELD

The present disclosure relates to a positive electrode active material, a positive electrode, an alkaline rechargeable battery, and a method of producing a positive electrode active material.

### BACKGROUND ART

Japanese Patent Laying-Open No. H01-200555 (PTL 1) discloses covering nickel hydroxide particles with a cobalt compound.

### CITATION LIST

### PATENT LITERATURE

PTL 1: Japanese Patent Laying-Open No. H01-200555

### SUMMARY OF INVENTION

### TECHNICAL PROBLEM

As a positive electrode active material of an alkaline rechargeable battery, nickel hydroxide [Ni(OH)₂] particles are used. Nickel hydroxide particles have a low electronic conductivity. For offsetting the low electronic conductivity of nickel hydroxide particles, a technique is known to cover surfaces of nickel hydroxide particles with a cobalt (Co) compound.

An object of the present disclosure is to provide a positive electrode active material that may have a high conductivity.

### SOLUTION TO PROBLEM

In the following, the technical structure and the effects according to the present disclosure are described. It should be noted that the action mechanism according to the present disclosure includes presumption. Therefore, the scope of claims should not be limited by whether or not the action mechanism is correct.
[1] A positive electrode active material is for an alkaline rechargeable battery. The positive electrode active material includes a composite particle. The composite particle includes a core particle and a covering layer. The core particle includes a nickel composite hydroxide.
   The nickel composite hydroxide is represented by the following formula (I):

   Niₓ₁Zn_{1-x1-y1}Co_{y1}(OH)₂ .............. (I)

   where x1 and y1 satisfy 0.90≤x1<1.00, 0≤y1≤0.01, and 0<(1-x1-y1).
   The covering layer covers at least a part of a surface of the core particle. The covering layer includes a cobalt compound. In an X-ray absorption fine structure obtainable through measurement by a total electron yield method with soft X-ray, cobalt L₃ absorption edge has a peak top in a range not less than 780.5 eV.
   The positive electrode active material according to [1] above may have a high electronic conductivity. Although the detailed mechanism of this high electronic conductivity exhibited by the positive electrode active material according to [1] above is unclear at this point, the X-ray absorption fine structure (XAFS) of the positive electrode active material according to [1] above has an unconventional characteristic. More specifically, Co L₃ absorption edge has a peak top in a range not less than 780.5 eV.
   An X-ray absorption spectrum attributed to the L shell has three absorption edges, namely, L₁ absorption edge, L₂ absorption edge, and L₃ absorption edge. It is considered that the L₁ absorption edge corresponds to the 2s orbital. It is considered that the L₂ absorption edge corresponds to the 2p_{1/2} orbital. It is considered that the L₃ absorption edge corresponds to the 2p_{3/2} orbital.
   It is considered that the peak top position of Co L₃ absorption edge (hereinafter, also called "Co L₃-edge") indicates information regarding the oxidation state and the like of Co in the cobalt compound. When a nickel composite hydroxide has the composition represented by the above formula (I), Co L₃-edge usually has a peak top in a range less than 780.5 eV (for example, at about 780.4 eV). In the case of the positive electrode active material according to [1] above, the peak top of Co L₃-edge is shifted toward higher energy side. It is considered that, in the case of the positive electrode active material according to [1] above, the core particle is covered with a cobalt compound that is not conventionally used and thereby a high electronic conductivity is exhibited.
[2] A positive electrode active material is for an alkaline rechargeable battery. The positive electrode active material includes a composite particle. The composite particle includes a core particle and a covering layer. The core particle includes a nickel composite hydroxide.
   The nickel composite hydroxide is represented by the following formula (II):

   Niₓ₂Mg_{1-x2-y2}Co_{y2}(OH)₂ .............. (II)

   where x2 and y2 satisfy 0.90≤x2<1.00, 0≤y2≤0.01, and 0<(1-x2-y2).
   The covering layer covers at least a part of a surface of the core particle. The covering layer includes a cobalt compound. In an X-ray absorption fine structure obtainable through measurement by a total electron yield method with soft X-ray, cobalt L₃ absorption edge has a peak top in a range not less than 780.7 eV.
   The positive electrode active material according to [2] above may also have a high electronic conductivity. When a nickel composite hydroxide has the composition represented by the above formula (II), Co L₃-edge usually has a peak top in a range less than 780.7 eV (for example, at about 780.6 eV). In the case of the positive electrode active material according to [2] above, the peak top of Co L₃-edge is shifted toward higher energy side. It is considered that, in the case of the positive electrode active material according to [2] above, the core particle is covered with a cobalt compound that is not conventionally used and thereby a high electronic conductivity is exhibited.
[3] A mass of cobalt in the covering layer may be from 2 mass% to 4 mass% of a total mass of the composite particle.
   The peak shift of Co L₃-edge may occur due to composite actions of multiple factors. The ratio of the mass of Co in the covering layer to the total mass of the composite particle (hereinafter, also called "Co content of the covering layer") may be one of the factors for the peak shift of Co L₃-edge. When the Co content of the covering layer is from 2 mass% to 4 mass%, the oxidation state and the like of Co may be changed, potentially resulting in a shift of the peak top of Co L₃-edge toward higher energy side.
   The mass of cobalt in the covering layer may be from 1.6 mass% to 5.0 mass% of the total mass of the composite particle.
[4] A positive electrode includes at least the positive electrode active material according to any one of [1] to [3] above.
[5] An alkaline rechargeable battery includes at least the positive electrode according to [4] above. The alkaline rechargeable battery may have excellent high-rate properties, for example. It may be because the positive electrode active material has a high electronic conductivity.
[6] A method of producing a positive electrode active material is a method of producing a positive electrode active material for an alkaline rechargeable battery. The method of producing a positive electrode active material includes at least (a) to (d) below:
   (a) preparing a core particle;
   (b) crystallizing cobalt hydroxide on at least a part of a surface of the core particle to prepare a composite particle including the core particle and a covering layer;
   (c) oxidizing the cobalt hydroxide by heating the composite particle in the co-presence of sodium hydroxide to form a cobalt compound; and
   (d) after the cobalt compound is formed, rinsing with water and drying the composite particle to produce a positive electrode active material,
   wherein the composite particle is mixed with sodium hydroxide so that a molar ratio of sodium hydroxide to the cobalt hydroxide during the heating the composite particle is from 1.5 to 2.5, and
   the cobalt compound is formed so that a mass of cobalt in the covering layer is from 2 mass% to 4 mass% of a total mass of the composite particle.
   Conditions for oxidation of the cobalt hydroxide may be one of the factors for the peak shift of Co L₃-edge. When the molar ratio of sodium hydroxide to the cobalt hydroxide during the heating the composite particle is from 1.5 to 2.5, the oxidation state and the like of Co may be changed, potentially resulting in a shift of the peak top of Co L₃-edge toward higher energy side.
   Also when the Co content of the covering layer is from 2 mass% to 4 mass%, the oxidation state and the like of Co may be changed, potentially resulting in a shift of the peak top of Co L₃-edge toward higher energy side.
   The composite particle may be mixed with sodium hydroxide so that the molar ratio of sodium hydroxide to the cobalt hydroxide during the heating the composite particle is from 2.27 to 3.08. The cobalt compound may be formed so that the mass of cobalt in the covering layer is from 1.6 mass% to 5.0 mass% of the total mass of the composite particle.
[7] In the method of producing a positive electrode active material according to [6] above, the core particle may include a nickel composite hydroxide.
   The nickel composite hydroxide may be represented by the following formula (I):

   Niₓ₁Zn_{1-x1-y1}Co_{y1}(OH)₂ .............. (I)

   where x1 and y1 satisfy 0.90≤x1<1.00, 0≤y1≤0.01, and 0<(1-x1-y1).
   The cobalt compound may be formed so that, in an X-ray absorption fine structure of the positive electrode active material obtainable through measurement by a total electron yield method with soft X-ray, cobalt L₃ absorption edge has a peak top in a range not less than 780.5 eV.
[8] In the method of producing a positive electrode active material according to [6] above, the core particle may include a nickel composite hydroxide.
   The nickel composite hydroxide may be represented by the following formula (II):

   Nix2Mgl-x2-y2COy2(OH)2 .............. (II)

   where x2 and y2 satisfy 0.90≤x2<1.00, 0≤y2≤0.01, and 0<(1-x2-y2).

The cobalt compound may be formed so that, in an X-ray absorption fine structure of the positive electrode active material obtainable through measurement by a total electron yield method with soft X-ray, cobalt L₃ absorption edge has a peak top in a range not less than 780.7 eV.

### BRIEF DESCRIPTION OF DRAWINGS

Fig. 1 is a conceptual cross-sectional view for describing a positive electrode active material according to the present embodiment.
Fig. 2 is a flowchart schematically illustrating a method of producing a positive electrode active material according to the present embodiment.
Fig. 3 is a schematic view illustrating an example configuration of an alkaline rechargeable battery according to the present embodiment.
Fig. 4 illustrates Co L₃-edges obtained in Example 1 and Comparative Example 1.
Fig. 5 illustrates Co L₃-edges obtained in Example 2 and Comparative Example 2.

### DESCRIPTION OF EMBODIMENTS

In the following, embodiments of the present disclosure (herein called "present embodiment") are described. However, the description below does not limit the scope of claims.

### <Positive Electrode Active Material>

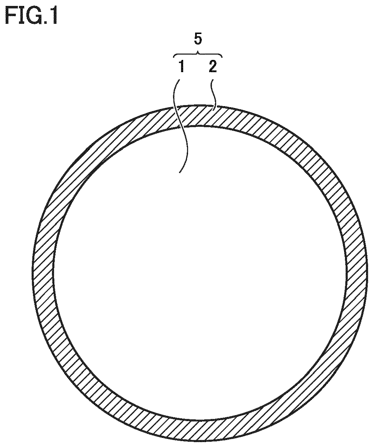

Fig. 1 is a conceptual cross-sectional view for describing a positive electrode active material according to the present embodiment.

The positive electrode active material according to the present embodiment is for an alkaline rechargeable battery. The positive electrode active material includes a composite particle 5. Typically, the positive electrode active material consists of a plurality of composite particles 5. In other words, the positive electrode active material is a group of particles (powder).

The d50 of the positive electrode active material is not particularly limited. The d50 of the positive electrode active material may be from 1 µm to 30 µm, for example. The "d50" herein refers to a particle size in particle size distribution obtained by laser diffraction and scattering at which the cumulative particle volume (accumulated from the side of small sizes) reaches 50% of the total particle volume.

The BET specific surface area of the positive electrode active material is not particularly limited. The BET specific surface area of the positive electrode active material may be 9 m²/g or more, for example. The "BET specific surface area" herein refers to a value calculated by a BET multi-point method based on an absorption isotherm obtained through measurement by a nitrogen gas adsorption method. The upper limit to the BET specific surface area is not particularly limited. The BET specific surface area of the positive electrode active material may be 50 m2/g or less, for example.

### «Composite Particle»

Composite particle 5 has a core-shell structure. More specifically, composite particle 5 includes a core particle 1 and a covering layer 2. The particle shape of composite particle 5 is not particularly limited. Composite particle 5 may be spherical, ellipsoidal, plate-like, rod-like, and/or the like, for example.

### «Core Particle»

Core particle 1 is the core of composite particle 5. The particle shape of core particle 1 is not particularly limited. Core particle 1 may be spherical, ellipsoidal, plate-like, rod-like, and/or the like, for example. Core particle 1 may have a d50 from 1 µm to 30 µm, for example.

Core particle 1 includes a nickel composite hydroxide. The nickel composite hydroxide is in a discharged state. It is considered that charging may change the nickel composite hydroxide into an oxyhydroxide and/or the like, for example. The "nickel composite hydroxide" herein refers to a compound that includes a nickel (Ni) ion, a metal ion other than Ni ion, and a hydroxide ion (OH⁻). The composition of core particle 1 may be uniform throughout the entire particle. Core particle 1 may have a locally different composition inside the particle. For example, Ni(OH)₂, zinc hydroxide [Zn(OH)₂], magnesium hydroxide [Mg(OH)₂], cobalt hydroxide [Co(OH)₂], and/or the like may be included as part of core particle 1. Core particle 1 may include a trace amount of elements inevitably entrapped during production.

The composition of the nickel composite hydroxide may be one of the factors for the peak shift of Co L₃-edge. The composition of the nickel composite hydroxide may affect the oxidation state and the like of Co in a cobalt compound formed on a surface, and may change them, potentially resulting in a shift of the peak top of Co L₃-edge toward higher energy side.

The nickel composite hydroxide may be represented by, for example, the following formula (I):

Niₓ₁Zn_{1-x1-y1}Co_{y1}(OH)₂ .............. (I)

where x1 and y1 satisfy 0.90≤x1<1.00, 0≤y1≤0.01, and 0<(1-x1-y1).

In the composition represented by the above formula (I), a peak shift of Co L₃-edge of 0.1 eV or more may occur, for example.

The nickel composite hydroxide may be represented by, for example, the following formula (II):

Niₓ₂Mg_{1-x2-y2}Co_{y2}(OH)₂ .............. (II)

where x2 and y2 satisfy 0.90≤x2<1.00, 0≤y2≤0.01, and 0<(1-x2-y2).

In the composition represented by the above formula (II), a peak shift of Co L₃-edge of 0.1 eV or more may occur, for example.

As seen from the above formulae (I) and (II), the nickel composite hydroxide according to the present embodiment includes Co as an optional component. The nickel composite hydroxide may be substantially free of Co. When the nickel composite hydroxide represented by the above formula (I) includes Co, the molar ratio of Co to the sum of Ni, Zn, and Co is 0.01 or less. When the nickel composite hydroxide represented by the above formula (II) includes Co, the molar ratio of Co to the sum of Ni, Mg, and Co is 0.01 or less. In the above formulae (I) and (II), x1, y1, x2, and y2 are significant to two decimal places. They are rounded to two decimal places. For example, when x1 is 0.908, x1 is regarded as 0.91. For example, when x1 is 0.903, x1 is regarded as 0.90.

The crystal structure of core particle 1 may also be one of the factors for the peak shift of Co L₃-edge. It is considered that X-ray diffraction (XRD) of the positive electrode active material (composite particle 5) reflects the crystal structure of core particle 1. For example, in XRD of the positive electrode active material according to the present embodiment, a peak corresponding to the 101 plane may have a full width at half maximum (FWHM) of 0.9 or more.

### «Covering Layer»

Covering layer 2 serves as a shell for composite particle 5. Covering layer 2 has electronic conductivity. Covering layer 2 covers at least a part of a surface of core particle 1. Covering layer 2 may cover substantially the entire surface of core particle 1. Covering layer 2 may cover part of a surface of core particle 1. As long as covering layer 2 covers at least a part of a surface of core particle 1, compared to when core particle 1 is without covering layer 2, electronic conductivity may be enhanced.

Covering layer 2 includes a cobalt compound. Covering layer 2 may consist essentially of a cobalt compound. The composition of covering layer 2 may be uniform throughout the entire layer. Covering layer 2 may have a locally different composition inside the layer. For example, a nickel compound, a zinc compound, a magnesium compound, a sodium compound, and/or the like may be included as part of covering layer 2.

Typically, the cobalt compound may be cobalt oxide. However, when the nickel composite hydroxide is represented by the above formula (I) and as long as Co L₃-edge has a peak top in a range not less than 780.5 eV, the cobalt compound is not limited to cobalt oxide. Further, when the nickel composite hydroxide is represented by the above formula (II) and as long as Co L₃-edge has a peak top in a range not less than 780.7 eV, the cobalt compound is not limited to cobalt oxide. For example, the cobalt compound may be a composite oxide that includes Co and a metal except Co. For example, the cobalt compound may be an oxyhydroxide and/or the like.

The Co content of covering layer 2 may be one of the factors for the peak shift of Co L₃-edge. The Co content of covering layer 2 may be from 2 mass% to 4 mass%. With this configuration, the oxidation state and the like of Co may be changed, potentially resulting in a shift of the peak top of Co L₃-edge toward higher energy side. The Co content of covering layer 2 is the ratio of the mass of Co in covering layer 2 to the total mass of composite particle 5. The mass of Co in covering layer 2 is calculated by subtracting the mass of Co in core particle 1 from the mass of Co in the entire composite particle 5. The mass of Co in the entire composite particle 5 as well as the mass of Co in core particle 1 may be measured by inductively coupled plasma atomic emission spectroscopy (ICP atomic emission spectroscopy, ICP-AES), for example. Measurement of the Co content of covering layer 2 is carried out at least three times. The arithmetic mean of these at least three measurements is used.

For example, the Co content of covering layer 2 may be from 1.6 mass% to 5.0 mass%. For example, the Co content of covering layer 2 may be 2.8 mass% or more. For example, the Co content of covering layer 2 may be 4.2 mass% or more. For example, the Co content of covering layer 2 may be 4.4 mass% or more.

### «XAFS»

In the present embodiment, when the nickel composite hydroxide is represented by the above formula (I) (a configuration in which Zn is added to the nickel composite hydroxide), in an XAFS of the positive electrode active material obtainable through measurement by a total electron yield method with soft X-ray, Co L₃-edge has a peak top in a range not less than 780.5 eV. For example, Co L₃-edge may have a peak top in the range of 780.5 eV to 783 eV. For example, Co L₃-edge may have a peak top in the range of 780.5 eV to 782 eV. For example, Co L₃-edge may have a peak top in the range of 780.5 eV to 781 eV.

In the present embodiment, when the nickel composite hydroxide is represented by the above formula (II) (a configuration in which Mg is added to the nickel composite hydroxide), in an XAFS of the positive electrode active material obtainable through measurement by a total electron yield method with soft X-ray, Co L₃-edge has a peak top in a range not less than 780.7 eV. For example, Co L₃-edge may have a peak top in the range of 780.7 eV to 783 eV. For example, Co L₃-edge may have a peak top in the range of 780.7 eV to 782 eV. For example, Co L₃-edge may have a peak top in the range of 780.7 eV to 781 eV.

The XAFS measurement according to the present embodiment may be performed on a beamline "BL-11" in SR Center of Ritsumeikan University, for example. The measurement may also be performed on an equivalent facility. The positive electrode active material (powder) is fixed to a surface of a strip of conductive tape (for example, carbon tape) to prepare a measurement sample. The measurement sample is set on the sample stage.

The XAFS measurement is performed by a total electron yield (TEY) method. The energy range for the measurement is set so that a peak top of Co L₃-edge can be identified. For example, the energy range for the measurement may be from 760 eV to 860 eV. It is considered that an X-ray absorption spectrum obtained by a TEY method indicates information regarding near-surface of composite particle 5. In other words, it is considered that an X-ray absorption spectrum obtained by a TEY method indicates information mainly regarding covering layer 2. From the X-ray absorption spectrum, background is removed. The background is removed by using "Demeter", data processing software for X-ray absorption spectroscopy. Any software having the same function as "Demeter" may also be used. After the background is removed, the peak top position of Co L₃-edge is identified.

The peak top position (eV) is significant to one decimal place. It is rounded to one decimal place. For example, 780.67 eV is regarded as 780.7 eV. For example, 780.63 eV is regarded as 780.6 eV.

### «Volume Resistivity of Powder»

The positive electrode active material according to the present embodiment may have a high electronic conductivity. As an index for electronic conductivity, volume resistivity of its powder may be used. When the nickel composite hydroxide is represented by the above formula (I) (a configuration in which Zn is added to the nickel composite hydroxide), the positive electrode active material (powder) according to the present embodiment may have a volume resistivity of 4.9 Ω·cm or less.

For example, the positive electrode active material (powder) according to the present embodiment may have a volume resistivity of 7.6 Ω·cm or less. For example, the positive electrode active material (powder) according to the present embodiment may have a volume resistivity of 6.1 Ω·cm or less. For example, the positive electrode active material (powder) according to the present embodiment may have a volume resistivity of 2.7 Ω·cm or less. For example, the positive electrode active material (powder) according to the present embodiment may have a volume resistivity of 1.8 Ω·cm or less. For example, the positive electrode active material (powder) according to the present embodiment may have a volume resistivity of 1.6 Ω·cm or less.

When the nickel composite hydroxide is represented by the above formula (II) (a configuration in which Mg is added to the nickel composite hydroxide), the positive electrode active material (powder) according to the present embodiment may have a volume resistivity of 6.5 Ω·cm or less.

The lower limit to the volume resistivity is not particularly limited. For example, the positive electrode active material (powder) according to the present embodiment may have a volume resistivity of 0.1 Ω·cm or more. For example, the positive electrode active material (powder) according to the present embodiment may have a volume resistivity of 1 Ω·cm or more.

The volume resistivity of the powder is also called "powder resistivity". The volume resistivity of the powder may be measured with, for example, a powder resistivity measurement system (model "MCP-PD51" manufactured by Mitsubishi Chemical Analytech Co., Ltd.), a resistivity meter (model "MCP-T610" manufactured by Mitsubishi Chemical Analytech Co., Ltd.), and the like. An equivalent apparatus may also be used. A four-pin probe is used. The electrodes are spaced by 3 mm. The radius of each electrode is 0.7 mm.

The positive electrode active material (powder) is charged into a sample chamber. The amount of the powder thus charged is 3 g, for example. The radius of the sample chamber is 10 mm, for example. A load is applied to the powder. While the powder is under a load of 20 kN, volume resistivity is measured. The measurement start range is 0 Ω. The applied voltage limiter is 10 V. Measurement of volume resistivity is carried out at least three times. The arithmetic mean of these at least three measurements is used.

### <Method of Producing Positive Electrode Active Material>

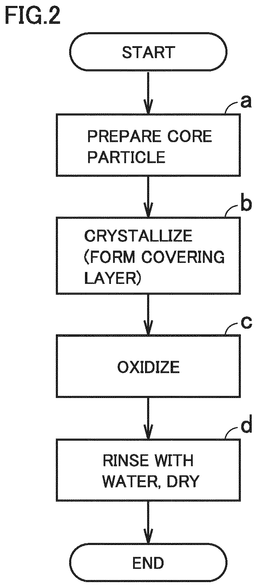

Fig. 2 is a flowchart schematically illustrating a method of producing a positive electrode active material according to the present embodiment.

The method of producing a positive electrode active material according to the present embodiment includes at least "(a) preparing a core particle", "(b) crystallizing", "(c) oxidizing", and "(d) rinsing with water and drying".

### «(a) Preparing Core Particle»

The method of producing a positive electrode active material according to the present embodiment includes preparing core particle 1. Core particle 1 includes a nickel composite hydroxide. Core particle 1 may be prepared by purchasing commercially-available nickel composite hydroxide particles. Core particle 1 may be prepared by synthesizing core particle 1. Core particle 1 may be synthesized by the following method, for example.

For example, nickel sulfate, zinc sulfate, and cobalt sulfate may be dissolved in water to prepare a raw material liquid. For example, these nickel sulfate, zinc sulfate, and cobalt sulfate may be mixed so that the molar ratio between nickel, zinc, and cobalt is "Ni:Zn:Co = x1:(1-x1-y1):y1". For example, x1 and y1 may satisfy 0.90≤x1<1.00, 0≤y1≤0.01, and 0<(1-x1-y1).

For example, nickel sulfate, magnesium sulfate, and cobalt sulfate may be dissolved in water to prepare a raw material liquid. For example, these nickel sulfate, magnesium sulfate, and cobalt sulfate may be mixed so that the molar ratio between nickel, magnesium, and cobalt is "Ni:Mg:Co = x2:(1-x2-y2):y2". For example, x2 and y2 may satisfy 0.90≤x2<1.00, 0≤y2≤0.01, and 0<1-x2-y2.

When cobalt sulfate is not included in the raw material liquid, part of the Co may be diffused in core particle 1 (nickel composite hydroxide) during, for example, formation of covering layer 2, and thereby Co may be included in the nickel composite hydroxide.

A reaction tank is prepared. The reaction tank may be equipped with a stirrer, a heater, a temperature controller, and the like. In the reaction tank, water, an ammonium sulfate aqueous solution, and a sodium hydroxide aqueous solution are mixed to prepare a first alkali aqueous solution. The temperature of the first alkali aqueous solution is adjusted to about 40°C, for example. The ammonia concentration of the first alkali aqueous solution is adjusted to about 12.5 g/L, for example. The pH of the first alkali aqueous solution (value measured at 40°C) is adjusted to a range of 12 to 13, for example.

While the first alkali aqueous solution in the reaction tank is being stirred with the stirrer, the raw material liquid is added dropwise to the first alkali aqueous solution. During the dropwise addition of the raw material liquid, in order to avoid a significant change in the temperature of the reaction liquid, in the ammonia concentration of the reaction liquid, and in the pH of the reaction liquid, heating, addition of an extra amount of an ammonium sulfate aqueous solution, and addition of an extra amount of a sodium hydroxide aqueous solution are performed as appropriate. The temperature of the reaction liquid is adjusted to 40 ± 1°C, for example. The ammonia concentration of the reaction liquid is adjusted to 12.5 ± 1 g/L, for example. The pH of the reaction liquid is adjusted to 12.5 ± 0.5, for example.

In this way, core particle 1 is produced. Core particle 1 is collected through an overflow tube and/or the like, for example. Core particle 1 thus collected may be rinsed with water, dehydrated, dried, and the like.

### <<(b) Crystallizing»

The method of producing a positive electrode active material according to the present embodiment includes crystallizing cobalt hydroxide on at least a part of a surface of core particle 1 to prepare composite particle 5 including core particle 1 and covering layer 2.

Covering layer 2 may be formed by neutralization crystallization, for example. A reaction tank is prepared. The reaction tank may be equipped with a stirrer, a heater, a temperature controller, and the like. In the reaction tank, water, an ammonium sulfate aqueous solution, and a sodium hydroxide aqueous solution are mixed to prepare a second alkali aqueous solution. The temperature of the second alkali aqueous solution is adjusted to about 45°C, for example. The ammonia concentration of the second alkali aqueous solution is adjusted to about 12.5 g/L, for example. The pH of the second alkali aqueous solution (value measured at 40°C) is adjusted to a range of 9.7 to 10.7, for example.

Core particle 1 prepared in the above manner is added to the second alkali aqueous solution. After core particle 1 is added, while the second alkali aqueous solution is being stirred, a cobalt salt aqueous solution is added dropwise thereto. The cobalt salt may be cobalt sulfate and/or the like, for example. The concentration of the cobalt salt aqueous solution may be about 90 g/L, for example.

During the dropwise addition of the cobalt salt aqueous solution, in order to avoid a significant change in the temperature of the reaction liquid and in the pH of the reaction liquid, heating and addition of an extra amount of a sodium hydroxide aqueous solution are performed as appropriate. The temperature of the reaction liquid is adjusted to 45°C ± 1°C, for example. The pH of the reaction liquid is adjusted to 10.2 ± 0.5, for example.

The amount of cobalt sulfate added dropwise is adjusted so that the Co content of the covering layer of the final product (obtained after oxidation of covering layer 2) is from 2 mass% to 4 mass%.

For example, the Co content of the covering layer may be from 1.6 mass% to 5.0 mass%. For example, the Co content of covering layer 2 may be 2.8 mass% or more. For example, the Co content of covering layer 2 may be 4.2 mass% or more. For example, the Co content of covering layer 2 may be 4.4 mass% or more.

In this way, cobalt hydroxide is crystallized on at least a part of a surface of core particle 1. In other words, composite particle 5 including core particle 1 and covering layer 2 is prepared. Covering layer 2 at this point includes cobalt hydroxide. Cobalt hydroxide is a precursor of a cobalt compound. Cobalt hydroxide refers to a compound that includes a cobalt (Co) ion and a hydroxide ion (OH⁻). Cobalt hydroxide may be Co(OH)₂, Co(OH)₃, and/or the like, for example. Composite particle 5 is collected and dried.

### «(c) Oxidizing»

The method of producing a positive electrode active material according to the present embodiment includes oxidizing the cobalt hydroxide by heating composite particle 5 in the co-presence of sodium hydroxide to form a cobalt compound.

A sodium hydroxide aqueous solution is prepared. The concentration of the sodium hydroxide aqueous solution is about 48 mass%, for example. Composite particle 5 (powder) is stirred in a dry state. While composite particle 5 (powder) is being stirred, the sodium hydroxide aqueous solution is added dropwise to composite particle 5 (powder). In other words, composite particle 5 is mixed with sodium hydroxide. The mixing ratio between composite particle 5 and sodium hydroxide is adjusted so that the molar ratio of sodium hydroxide to the cobalt hydroxide is from 1.5 to 2.5.

For example, the molar ratio of sodium hydroxide to the cobalt hydroxide may be from 2.27 to 3.08. For example, the molar ratio of sodium hydroxide to the cobalt hydroxide may be 3.05 or less. For example, the molar ratio of sodium hydroxide to the cobalt hydroxide may be 3.05 or more.

The mixture of composite particle 5 and the sodium hydroxide aqueous solution is heated at, for example, 120°C, for about one hour to oxidize cobalt hydroxide (covering layer 2) and form a cobalt compound.

### «(d) Rinsing with Water, Drying»

The method of producing a positive electrode active material according to the present embodiment includes, after the cobalt compound is formed, rinsing with water and drying composite particle 5 to produce a positive electrode active material.

After the cobalt compound is formed, composite particle 5 is rinsed with water, dehydrated, and dried. Thus, a positive electrode active material according to the present embodiment is produced. Covering layer 2 of the positive electrode active material (final product) includes a cobalt compound.

In the present embodiment, when the nickel composite hydroxide is represented by the above formula (I) (a configuration in which Zn is added to the nickel composite hydroxide), the cobalt compound may be formed so that Co L₃-edge in an XAFS of the positive electrode active material has a peak top in a range not less than 780.5 eV.

In the present embodiment, when the nickel composite hydroxide is represented by the above formula (II) (a configuration in which Mg is added to the nickel composite hydroxide), the cobalt compound may be formed so that Co L₃-edge in an XAFS of the positive electrode active material has a peak top in a range not less than 780.7 eV.

### <Alkaline Rechargeable Battery>

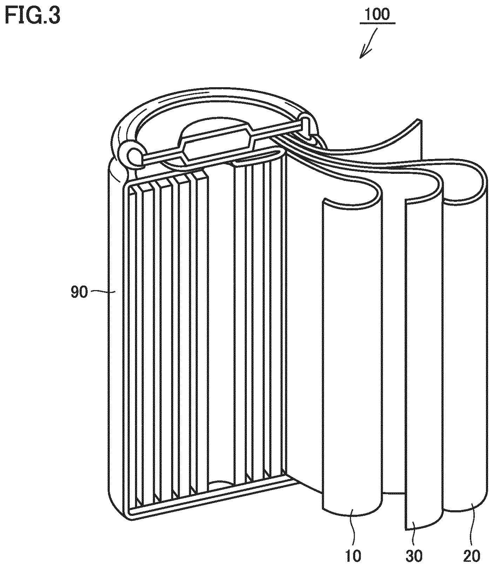

Fig. 3 is a schematic view illustrating an example configuration of an alkaline rechargeable battery according to the present embodiment.

A battery 100 is an alkaline rechargeable battery. The alkaline rechargeable battery is not particularly limited as long as it includes the positive electrode active material according to the present embodiment. The alkaline rechargeable battery may be a nickel-metal hydride battery, a nickel-zinc battery, a nickel-cadmium battery, a nickel-iron battery, and/or the like, for example. In the present specification, a nickel-metal hydride battery is described as an example.

### «Housing»

Battery 100 includes a housing 90. Housing 90 may be made of metal material, polymer material, and/or the like, for example. Housing 90 is cylindrical. Alternatively, housing 90 may be prismatic. Housing 90 accommodates a positive electrode 10, a separator 30, a negative electrode 20, and an alkali aqueous solution. In other words, battery 100 includes at least positive electrode 10.

### «Positive Electrode»

Positive electrode 10 is in sheet form. Positive electrode 10 includes at least the positive electrode active material according to the present embodiment. As described above, the positive electrode active material according to the present embodiment may have a high electronic conductivity. Therefore, battery 100 may have excellent high-rate properties, for example. Positive electrode 10 may further include a positive electrode current collector, a binder, and the like, for example, in addition to the positive electrode active material.

The positive electrode current collector may be a metal porous body, for example. More specifically, positive electrode 10 may be formed by, for example, filling pores of a Ni porous body with the positive electrode active material, the binder, and the like. Examples of the Ni porous body include "Celmet (registered trademark)" manufactured by Sumitomo Electric Industries, Ltd.

The positive electrode current collector may be a metal foil, for example. More specifically, positive electrode 10 may be formed by, for example, applying the positive electrode active material and the binder to a surface of a Ni foil. The metal foil may be a Ni-plated steel foil, for example. The metal foil may have a thickness from 5 µm to 50 µm, for example.

For use in high-rate applications, it is desirable that positive electrode 10 be thin and have a large area. When the positive electrode current collector is a metal porous body, it may be difficult to form a thin positive electrode 10 while maintaining a high volume ratio of the positive electrode active material in positive electrode 10; in other words, it may be difficult to achieve high-rate properties and high capacity at the same time.

When the positive electrode current collector is a metal foil, high-rate properties and high capacity may be achieved at the same time. However, when the positive electrode current collector is a metal foil, compared to when the positive electrode current collector is a metal porous body, positive electrode 10 tends to have a high electrical resistance. It may be because a metal porous body collects electric currents three-dimensionally while a metal foil collects electric currents two-dimensionally (planar). As described above, the positive electrode active material according to the present embodiment may have a high electronic conductivity. The positive electrode active material according to the present embodiment may be suitable for positive electrode 10 that includes a metal foil as a positive electrode current collector.

Applications of battery 100 according to the present embodiment are not limited to high-rate applications. Battery 100 according to the present embodiment may be used in any application.

The binder combines the positive electrode active material (composite particle 5) to each other. The binder combines the positive electrode active material and the positive electrode current collector together. The binder is not particularly limited. For example, the binder may be styrene-butadiene rubber (SBR), carboxymethylcellulose (CMC), polytetrafluoroethylene (PTFE), and/or the like. Only one type of the binder may be used. Two or more types of the binder may be used in combination.

### «Negative Electrode»

Negative electrode 20 is in sheet form. Negative electrode 20 includes at least a negative electrode active material. Negative electrode 20 may further include a negative electrode current collector, a binder, and the like. The negative electrode current collector may be a perforated steel plate, for example. The perforated steel plate may have Ni-plating and/or the like applied thereto, for example.

Negative electrode 20 may be formed by, for example, applying the negative electrode active material, the binder, and the like to a surface of the negative electrode current collector. The binder may be, for example, a material described above as an example of the binder for positive electrode 10.

The negative electrode active material is a hydrogen storage alloy. The hydrogen storage alloy reversibly stores and releases protium (atomic hydrogen). The hydrogen storage alloy is not particularly limited. The hydrogen storage alloy may be an AB₅ alloy, for example. The AB₅ alloy may be LaNis, MmNis ("Mm" stands for a misch metal), and/or the like, for example. Only one type of the hydrogen storage alloy may be used. Two or more types of the hydrogen storage alloy may be used in combination.

### «Separator»

Separator 30 is interposed between positive electrode 10 and negative electrode 20. Separator 30 is electrically insulating. Separator 30 is a porous sheet. Separator 30 may have a thickness from 50 µm to 150 µm, for example. Separator 30 may be a polyolefin nonwoven fabric, a polyamide nonwoven fabric, and/or the like, for example.

### «Alkali Aqueous Solution»

The alkali aqueous solution is an electrolyte solution. Positive electrode 10, negative electrode 20, and separator 30 are impregnated with the alkali aqueous solution. The alkali aqueous solution includes water and an alkali metal hydroxide. The alkali aqueous solution may include an alkali metal hydroxide in an amount from 1 mol/L to 20 mol/L, for example. The alkali metal hydroxide may be potassium hydroxide (KOH), sodium hydroxide (NaOH), and/or lithium hydroxide (LiOH), for example. Only one type of the alkali metal hydroxide may be used. Two or more types of the alkali metal hydroxide may be used in combination.

### [Examples]

Next, examples according to the present disclosure are described. However, the description below does not limit the scope of claims.

### <Example 1>

### «(a) Preparing Core Particle»

Nickel sulfate and zinc sulfate were dissolved in water to prepare a raw material liquid. In the resulting raw material liquid, the molar ratio between nickel and zinc was "Ni:Zn = 0.96:0.04".

A reaction tank was prepared. The reaction tank was equipped with a stirrer, a heater, and a temperature controller. In the reaction tank, water, an ammonium sulfate aqueous solution, and a sodium hydroxide aqueous solution were mixed to prepare a first alkali aqueous solution. The temperature of the first alkali aqueous solution was adjusted to 40°C. The ammonia concentration of the first alkali aqueous solution was 12.5 g/L. The pH of the first alkali aqueous solution was adjusted to a range of 12 to 13 (value measured at 40°C).

While the alkali aqueous solution in the reaction tank was being stirred with the stirrer, the raw material liquid was added dropwise to the first alkali aqueous solution. During the dropwise addition of the raw material liquid, the temperature of the reaction liquid was adjusted to 40°C. During the dropwise addition of the raw material liquid, in order to maintain the ammonia concentration of the reaction liquid at about 12.5 g/L, an extra amount of an ammonium sulfate aqueous solution was added to the reaction liquid as appropriate. Further, during the dropwise addition of the raw material liquid, in order to maintain the pH of the reaction liquid within a range of 12 to 13, an extra amount of a sodium hydroxide aqueous solution was added as appropriate. In this way, a core particle was produced.

It is considered that the core particle included a nickel composite hydroxide. It is considered that the composition of the nickel composite hydroxide was Ni_{0.96}Zn_{0.04}(OH)₂. The core particle was collected through an overflow tube. The core particle was rinsed with water, dehydrated, and dried.

### <<(b) Crystallizing»

A reaction tank was prepared. The reaction tank was equipped with a stirrer, a heater, and a temperature controller. In the reaction tank, water, an ammonium sulfate aqueous solution, and a sodium hydroxide aqueous solution were mixed to prepare a second alkali aqueous solution. The temperature of the second alkali aqueous solution was adjusted to 45°C. The ammonia concentration of the second alkali aqueous solution was 12.5 g/L. The pH of the second alkali aqueous solution was adjusted to a range of 9.7 to 10.7 (value measured at 40°C).

A cobalt sulfate aqueous solution was prepared. The concentration of the cobalt sulfate aqueous solution was 90 g/L. The core particle was added to the second alkali aqueous solution. While the second alkali aqueous solution in the reaction tank was being stirred with the stirrer, the cobalt sulfate aqueous solution was added dropwise to the second alkali aqueous solution. During the dropwise addition of the cobalt sulfate aqueous solution, the temperature of the reaction liquid was adjusted to about 45°C. Further, during the dropwise addition of the cobalt sulfate aqueous solution, in order to maintain the pH of the reaction liquid within a range of 9.7 to 10.7, an extra amount of a sodium hydroxide aqueous solution was added as appropriate. The amount of cobalt sulfate added dropwise was adjusted so that the Co content of the covering layer of the final product (obtained after oxidation of the covering layer) was 2.8 mass%.

In this way, cobalt hydroxide was crystallized on at least a part of a surface of the core particle. In other words, a composite particle including a core particle and a covering layer was prepared. It is considered that the covering layer covered substantially the entire surface of the core particle. The covering layer at this point included cobalt hydroxide. The composite particle was collected and dried.

### «(c) Oxidizing»

A sodium hydroxide aqueous solution was prepared. The concentration of the sodium hydroxide aqueous solution was 48 mass%. The composite particle (powder) was stirred in a dry state. While the composite particle (powder) was being stirred, the sodium hydroxide aqueous solution was added dropwise to the composite particle (powder). In other words, the composite particle was mixed with sodium hydroxide. The mixing ratio between the composite particle and sodium hydroxide was adjusted so that the molar ratio of sodium hydroxide to the cobalt hydroxide was 2.27.

The mixture of the composite particle and the sodium hydroxide aqueous solution was heated at 120°C for one hour to oxidize the cobalt hydroxide and form a cobalt compound.

### «(d) Rinsing with Water, Drying»

After the cobalt compound was formed, the composite particle was rinsed with water, dehydrated, and dried. In this way, a positive electrode active material according to Example 1 was produced. The covering layer of the positive electrode active material (final product) included a cobalt compound.

### <Comparative Example 1>

### «(a) Preparing Core Particle»

In the same manner as in Example 1, a core particle was prepared.

### «(b) Crystallizing»

A composite particle including a core particle and a covering layer was prepared in the same manner as in Example 1 except that the amount of cobalt sulfate added dropwise was adjusted so that the Co content of the covering layer of the final product (obtained after oxidation of the covering layer) was 4.4 mass%.

### <<(c) Oxidizing»

A cobalt compound was formed in the same manner as in Example 1 except that the composite particle was mixed with sodium hydroxide so that the molar ratio of sodium hydroxide to the cobalt hydroxide was 0.95.

### «(d) Rinsing with Water, Drying»

After the cobalt compound was formed, the composite particle was rinsed with water, dehydrated, and dried. In this way, a positive electrode active material according to Comparative Example 1 was produced.

### <Example 2>

### «(a) Preparing Core Particle»

Nickel sulfate and magnesium sulfate were dissolved in water to prepare a raw material liquid. In the resulting raw material liquid, the molar ratio between nickel and magnesium was "Ni:Mg = 0.96:0.04".

A reaction tank was prepared. The reaction tank was equipped with a stirrer, a heater, and a temperature controller. In the reaction tank, water, an ammonium sulfate aqueous solution, and a sodium hydroxide aqueous solution were mixed to prepare a first alkali aqueous solution. The temperature of the first alkali aqueous solution was adjusted to 40°C. The ammonia concentration of the first alkali aqueous solution was 12.5 g/L. The pH of the first alkali aqueous solution was adjusted to a range of 12 to 13 (value measured at 40°C).

While the alkali aqueous solution in the reaction tank was being stirred with the stirrer, the raw material liquid was added dropwise to the first alkali aqueous solution. During the dropwise addition of the raw material liquid, the temperature of the reaction liquid was adjusted to 40°C. During the dropwise addition of the raw material liquid, in order to maintain the ammonia concentration of the reaction liquid at about 12.5 g/L, an extra amount of an ammonium sulfate aqueous solution was added to the reaction liquid as appropriate. Further, during the dropwise addition of the raw material liquid, in order to maintain the pH of the reaction liquid within a range of 12 to 13, an extra amount of a sodium hydroxide aqueous solution was added as appropriate. In this way, a core particle was produced.

It is considered that the core particle included a nickel composite hydroxide. It is considered that the composition of the nickel composite hydroxide was Ni_{0.96}Mg_{0.04}(OH)₂. The core particle was collected through an overflow tube. The core particle was rinsed with water, dehydrated, and dried.

### <<(b) Crystallizing»

A reaction tank was prepared. The reaction tank was equipped with a stirrer, a heater, and a temperature controller. In the reaction tank, water, an ammonium sulfate aqueous solution, and a sodium hydroxide aqueous solution were mixed to prepare a second alkali aqueous solution. The temperature of the second alkali aqueous solution was adjusted to 45°C. The ammonia concentration of the second alkali aqueous solution was 12.5 g/L. The pH of the second alkali aqueous solution was adjusted to a range of 9.7 to 10.7 (value measured at 40°C).

A cobalt sulfate aqueous solution was prepared. The concentration of the cobalt sulfate aqueous solution was 90 g/L. The core particle was added to the second alkali aqueous solution. While the second alkali aqueous solution in the reaction tank was being stirred with the stirrer, the cobalt sulfate aqueous solution was added dropwise to the second alkali aqueous solution. During the dropwise addition of the cobalt sulfate aqueous solution, the temperature of the reaction liquid was adjusted to about 45°C. Further, during the dropwise addition of the cobalt sulfate aqueous solution, in order to maintain the pH of the reaction liquid within a range of 9.7 to 10.7, an extra amount of a sodium hydroxide aqueous solution was added as appropriate. The amount of cobalt sulfate added dropwise was adjusted so that the Co content of the covering layer of the final product (obtained after oxidation of the covering layer) was 2.8 mass%.

In this way, cobalt hydroxide was crystallized on at least a part of a surface of the core particle. In other words, a composite particle including a core particle and a covering layer was prepared. It is considered that the covering layer covered substantially the entire surface of the core particle. The covering layer at this point included cobalt hydroxide. The composite particle was collected and dried.

### <<(c) Oxidizing»

A sodium hydroxide aqueous solution was prepared. The concentration of the sodium hydroxide aqueous solution was 48 mass%. The composite particle (powder) was stirred in a dry state. While the composite particle (powder) was being stirred, the sodium hydroxide aqueous solution was added dropwise to the composite particle (powder). In other words, the composite particle was mixed with sodium hydroxide. The mixing ratio between the composite particle and sodium hydroxide was adjusted so that the molar ratio of sodium hydroxide to the cobalt hydroxide was 2.27.

The mixture of the composite particle and the sodium hydroxide aqueous solution was heated at 120°C for one hour to oxidize the cobalt hydroxide and form a cobalt compound.

### «(d) Rinsing with Water, Drying»

After the cobalt compound was formed, the composite particle was rinsed with water, dehydrated, and dried. In this way, a positive electrode active material according to Example 2 was produced. The covering layer of the positive electrode active material (final product) included a cobalt compound.

### <Comparative Example 2>

### «(a) Preparing Core Particle»

In the same manner as in Example 2, a core particle was prepared.

### <<(b) Crystallizing»

A composite particle including a core particle and a covering layer was prepared in the same manner as in Example 2 except that the amount of cobalt sulfate added dropwise was adjusted so that the Co content of the covering layer of the final product (obtained after oxidation of the covering layer) was 4.4 mass%.

### <<(c) Oxidizing»

A cobalt compound was formed in the same manner as in Example 2 except that the composite particle was mixed with sodium hydroxide so that the molar ratio of sodium hydroxide to the cobalt hydroxide was 1.00.

### «(d) Rinsing with Water, Drying»

After the cobalt compound was formed, the composite particle was rinsed with water, dehydrated, and dried. In this way, a positive electrode active material according to Comparative Example 2 was produced.

### <Evaluation>

### «XAFS»

XAFS measurement for Example 1, Comparative Example 1, Example 2, and Comparative Example 2 was performed on a beamline "BL-11" in SR Center of Ritsumeikan University. The measurement conditions are as follows.
Monochromator: diffraction grating 600GHE
Irradiation size: 1 × 1 mm
Absorption edge measurement range: Co L₃-edge (760 to 840 eV)
Measurement method: TEY method
Measurement duration: about 20 minutes

From the resulting X-ray absorption spectrum, background was removed. The background was removed by using "Demeter". After the background was removed, the peak top position of Co L₃-edge was identified. The result is given in Table 1 below.

### «Volume Resistivity of Powder»

Volume resistivity of the powder was measured by the above-described method. The result is given in Table 1 below. For the measurement, a powder resistivity measurement system (model "MCP-PD51" manufactured by Mitsubishi Chemical Analytech Co., Ltd.) and a resistivity meter (model "MCP-T610" manufactured by Mitsubishi Chemical Analytech Co., Ltd.) were used.

**Table 1**

| | Positive electrode active material | | Production method | Evaluation | |
|---|---|---|---|---|---|
| | Composite particle | | Oxidation conditions | XAFS | Volume resistivity of powder [Ω·cm] |
| | Core particle | Covering layer | Molar ratio (NaOH/cobalt hydroxide) | Co L₃-edge | |
| | Composition | Co content^{(*1)} [mass%] | | Peak top position [eV] | |
| Ex. 1 | Ni_{0.96}Zn_{0.04}(OH)₂ | 2.8 | 2.27 | 780.5 | 4.9 |
| Comp. Ex. 1 | Ni_{0.96}Zn_{0.04}(OH)₂ | 4.4 | 0.95 | 780.4 | 32 |
| Ex. 2 | Ni_{0.96}Mg_{0.04}(OH)₂ | 2.8 | 2.27 | 780.7 | 6.5 |
| Comp. Ex. 2 | Ni_{0.96}Mg_{0.04}(OH)₂ | 4.4 | 1.00 | 780.6 | 49 |

| | | | | | |
|---|---|---|---|---|---|
| ^{(*1)} The Co content refers to the ratio of the mass of Co in the covering layer to the total mass of the composite particle. | | | | | |

### <Result 1>

As seen in Table 1 above, the volume resistivity in Example 1 was lower than the volume resistivity in Comparative Example 1 by a single order or so. In other words, Example 1 exhibited a high electronic conductivity compared to Comparative Example 1.

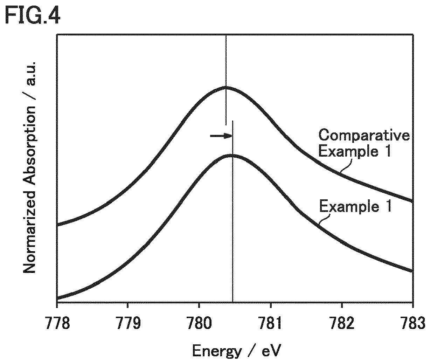

Fig. 4 illustrates Co L₃-edges obtained in Example 1 and Comparative Example 1.

In Example 1, compared to Comparative Example 1, the peak top of Co L₃-edge shifted toward higher energy side. It is considered that the cobalt oxidation number and the like were different between the cobalt compound in covering layer 2 of Example 1 and the cobalt compound in covering layer 2 of Comparative Example 1.

As seen in Table 1 above, the volume resistivity in Example 2 was lower than the volume resistivity in Comparative Example 2 by a single order or so. In other words, Example 2 exhibited a high electronic conductivity compared to Comparative Example 2.

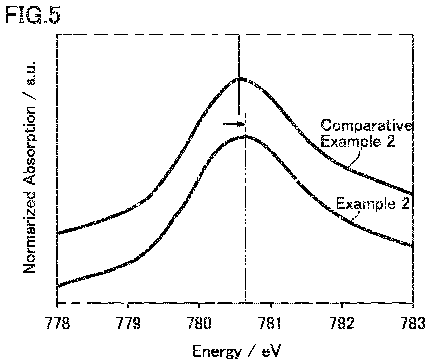

Fig. 5 illustrates Co L₃-edges obtained in Example 2 and Comparative Example 2.

In Example 2, compared to Comparative Example 2, the peak top of Co L₃-edge shifted toward higher energy side. It is considered that the cobalt oxidation number and the like were different between the cobalt compound in covering layer 2 of Example 2 and the cobalt compound in covering layer 2 of Comparative Example 2.

### <Examples 3 to 7>

A positive electrode active material was produced in the same manner as in Example 1 except that the Co content of the covering layer and oxidation conditions were changed as specified in Table 2 below. In the same manner as in Example 1, XAFS and volume resistivity of the positive electrode active material were measured. Results are given in Table 2 below.

**Table 2**

| | Positive electrode active material | | Production method | Evaluation | |
|---|---|---|---|---|---|
| | Composite particle | | Oxidation conditions | XAFS | Volume resistivity of powder [Ω·cm] |
| | Core particle | Covering layer | Molar ratio (NaOH/cobalt hydroxide) | Co L₃-edge | |
| | Composition | Co content^{(*1)} [mass%] | | Peak top position [eV] | |
| Ex. 3 | Ni_{0.96}Zn_{0.04}(OH)₂ | 1.6 | 2.27 | 780.5 | 7.6 |
| Ex. 4 | Ni_{0.96}Zn_{0.04}(OH)₂ | 2.0 | 2.27 | 780.5 | 6.1 |
| Ex. 5 | Ni_{0.96}Zn_{0.04}(OH)₂ | 4.2 | 2.27 | 780.5 | 2.7 |
| Ex. 6 | Ni_{0.96}Zn_{0.04}(OH)₂ | 4.4 | 3.08 | 780.5 | 1.8 |
| Ex. 7 | Ni_{0.96}Zn_{0.04}(OH)₂ | 5.0 | 3.05 | 780.5 | 1.6 |

| | | | | | |
|---|---|---|---|---|---|
| ^{(*1)} The Co content refers to the ratio of the mass of Co in the covering layer to the total mass of the composite particle. | | | | | |

### <Result 2>

Example 1 (Table 1) and Examples 3 to 5 (Table 2) demonstrate a tendency that, when the molar ratio of sodium hydroxide to cobalt hydroxide was the same (2.27), the volume resistivity decreased as the Co content of the covering layer increased.

Examples 5 to 7 (Table 2) demonstrate a tendency that the volume resistivity further decreased as the Co content of the covering layer increased and the molar ratio of sodium hydroxide to cobalt hydroxide increased.

These results indicate the following. For example, the Co content of the covering layer may be 1.6 mass% or more. For example, the Co content of the covering layer may be 2.0 mass% or more. For example, the Co content of the covering layer may be 2.8 mass% or more. For example, the Co content of the covering layer may be 4.2 mass% or more. For example, the Co content of the covering layer may be 4.4 mass% or more. For example, the Co content of the covering layer may be 5.0 mass% or less.

For example, the molar ratio of sodium hydroxide to cobalt hydroxide may be 2.27 or more. For example, the molar ratio of sodium hydroxide to cobalt hydroxide may be 3.05 or more. For example, the molar ratio of sodium hydroxide to cobalt hydroxide may be 3.08 or less. For example, the molar ratio of sodium hydroxide to cobalt hydroxide may be 3.05 or less.

The embodiments and the examples disclosed herein are illustrative and non-restrictive in any respect. The technical scope defined by the terms of the claims encompasses any modifications within the meaning and scope equivalent to the scope of the claims.

### REFERENCE SIGNS LIST

1 core particle; 2 covering layer; 5 composite particle; 10 positive electrode; 20 negative electrode; 30 separator; 90 housing; 100 battery (alkaline rechargeable battery)

## Claims

1. A positive electrode active material for an alkaline rechargeable battery, the positive electrode active material comprising:
a composite particle,
the composite particle including a core particle and a covering layer,
the core particle including a nickel composite hydroxide,
the nickel composite hydroxide being represented by the following formula (I):
Niₓ₁Zn_{1-x1-y1}Co_{y1}(OH)₂ .............. (I)
where x1 and y1 satisfy 0.90≤x1<1.00, 0≤y1≤0.01, and 0<(1-x1-y1),
the covering layer covering at least a part of a surface of the core particle, the covering layer including a cobalt compound,
in an X-ray absorption fine structure obtainable through measurement by a total electron yield method with soft X-ray, cobalt L₃ absorption edge having a peak top in a range not less than 780.5 eV.

2. A positive electrode active material for an alkaline rechargeable battery, the positive electrode active material comprising:
a composite particle,
the composite particle including a core particle and a covering layer,
the core particle including a nickel composite hydroxide,
the nickel composite hydroxide being represented by the following formula (II):
Niₓ₂Mg_{1-x2-y2}Co_{y2}(OH)₂ .............. (II)
where x2 and y2 satisfy 0.90≤x2<1.00, 0≤y2≤0.01, and 0<(1-x2-y2),
the covering layer covering at least a part of a surface of the core particle,
the covering layer including a cobalt compound,
in an X-ray absorption fine structure obtainable through measurement by a total electron yield method with soft X-ray, cobalt L₃ absorption edge having a peak top in a range not less than 780.7 eV.

3. The positive electrode active material according to claim 1 or 2, wherein a mass of cobalt in the covering layer is from 1.6 mass% to 5.0 mass% of a total mass of the composite particle.

4. A positive electrode including at least the positive electrode active material according to any one of claims 1 to 3.

5. An alkaline rechargeable battery including at least the positive electrode according to claim 4.

6. A method of producing a positive electrode active material for an alkaline rechargeable battery, the method comprising:
preparing a core particle;
crystallizing cobalt hydroxide on at least a part of a surface of the core particle to prepare a composite particle including the core particle and a covering layer;
oxidizing the cobalt hydroxide by heating the composite particle in the co-presence of sodium hydroxide to form a cobalt compound; and
after the cobalt compound is formed, rinsing with water and drying the composite particle to produce a positive electrode active material,
the composite particle being mixed with sodium hydroxide so that a molar ratio of sodium hydroxide to the cobalt hydroxide during the heating the composite particle is from 2.27 to 3.08,
the cobalt compound being formed so that a mass of cobalt in the covering layer is from 1.6 mass% to 5.0 mass% of a total mass of the composite particle.

7. The method of producing a positive electrode active material according to claim 6, wherein
the core particle includes a nickel composite hydroxide, the nickel composite hydroxide is represented by the following formula (I):
Niₓ₁Zn_{1-x1-y1}Co_{y1}(OH)₂ .............. (I)
where x1 and y1 satisfy 0.90≤x1<1.00, 0≤y1≤0.01, and 0<(1-x1-y1),
the cobalt compound is formed so that, in an X-ray absorption fine structure of the positive electrode active material obtainable through measurement by a total electron yield method with soft X-ray, cobalt L₃ absorption edge has a peak top in a range not less than 780.5 eV.

8. The method of producing a positive electrode active material according to claim 6, wherein
the core particle includes a nickel composite hydroxide,
the nickel composite hydroxide is represented by the following formula (II):
Nix2Mgl-x2-y2COy2(OH)2 .............. (II)
where x2 and y2 satisfy 0.90≤x2<1.00, 0≤y2≤0.01, and 0<(1-x2-y2),
the cobalt compound is formed so that, in an X-ray absorption fine structure of the positive electrode active material obtainable through measurement by a total electron yield method with soft X-ray, cobalt L₃ absorption edge has a peak top in a range not less than 780.7 eV.
